# EUROPÄISCHE PATENTSCHRIFT

(11) **EP 1 216 962 B1**
(45) Veröffentlichungstag und Bekanntmachung des Hinweises auf die Patenterteilung: **15.10.2003**
(21) Anmeldenummer: 01129292.7
(22) Anmeldetag: 13.12.2001
(51) Int. Cl.: C02F 1/58, B01D 12/00

(54) **Verfahren zur Entfernung von freien Aldehyden**
Method for removing free aldehydes
Procédé pour éliminer les aldéhydes libres

(30) Priorität: 21.12.2000 DE 10064085
(43) Veröffentlichungstag der Anmeldung: 26.06.2002
(73) Patentinhaber: Consortium für elektrochemische Industrie GmbH, 81379 München (DE)
(72) Erfinder: Schäfer, Oliver, Dr., 81377 München (DE); Stohrer, Jürgen, Dr., 82049 Pullach (DE); Döring, Wolfgang, Dr., 84508 Burgkirchen (DE)
(74) Vertreter: Rimböck, Karl-Heinz, Dr.

(56) Entgegenhaltungen:
- EP-A- 0 234 464
- EP-A- 0 277 688
- EP-A- 0 488 605
- EP-A- 0 610 892
- US-A- 4 532 947
- US-A- 5 206 204
- US-A- 5 356 899
- US-A- 5 705 537
- NISHIKAWA H ET AL: "Derivatization and chromatographic determination of aldehydes in gaseous and air samples" , JOURNAL OF CHROMATOGRAPHY A, ELSEVIER SCIENCE, NL, VOL. 710, NR. 1, PAGE(S) 159-165 XP004038712 ISSN: 0021-9673 * Seite 163, Spalte 1, Zeile 13 - Zeile 32 *

## Beschreibung

Gegenstand der Erfindung ist ein Verfahren zur Entfernung von freien Aldehyden.

Aldehyde und im besonderen die Verbindung Formaldehyd sind bekannt als reizende Chemikalien. Desweiteren werden Aldehyde wie z.B. Formaldehyd oder auch Acetaldehyd als mögliches Karzinogen angesehen. Sie gehören zu den wichtigsten Industriechemikalien und werden weltweit eingesetzt, umgesetzt aber auch ungewollt freigesetzt.

Formaldehyd wird beispielsweise bei der Produktion von Holzwerkstoffen als Formaldehyd-Phenolharz oder als Melamin-Formaldehyd-Harz eingesetzt. Unerwünschterweise geben diese Werkstoffe nach.der Produktion Formaldehyd in die Umgebung ab. Wegen seiner hohen Flüchtigkeit ist Formaldehyd auch häufig im Abgas industrieller Prozesse zu finden. Werden Textilien mit Formaldehyd-Derivaten wie Dimethyloldihydroxy-ethylenharnstoff (DMDHEU) oder anderen Methylol-funktionellen Verbindungen behandelt, so geben sie einen nicht geringen Teil des chemisch gebundenen Formaldehyds als freies Formaldehyd in die Umgebung ab. Häuser, die mit Formaldehyd-abgebenden Stoffen errichtet wurden, geben beispielsweise durch das Mauerwerk Formaldehyd in die Innenräume ab. Eine mögliche Abhilfe dieses Problems wird in DE 19809479 A1 vorgestellt, das ein Verfahren zum Sanieren von mit Formaldehyd belasteten Innenräumen durch den Einsatz von Schafwolle beschreibt.

Bei der Herstellung von Polymerdispersionen werden Formaldehydhaltige Verbindungen beispielsweise als Fungizide, als Monomere oder als Polymerisationsinitiatoren eingesetzt. Dies führt dazu, dass in der fertigen Dispersion größere Mengen an Formaldehyd vorhanden sind, welche bei der späteren Verwendung freigesetzt werden können.

So ist beispielsweise die Verwendung von Polymerdispersionen als Bindemittel zur Verfestigung und Beschichtung von Fasergebilden wie Geweben, Vliesen und Watten aus Textilfaser oder Textilgarnen oder auch Holzwerkstoffen bekannt. Häufig werden dabei Copolymerdispersionen von (Meth-)acrylat- oder Vinylester-Copolymerisaten eingesetzt, welche zur Verbesserung der Festigkeit selbstvernetzende Comonomereinheiten mit N-Methylol- oder N-Methylolether-Funktionen enthalten. Üblicherweise werden bis zu 10 Gew.-% N-Methylol(Meth-)acrylamid (NMAA) copolymerisiert. Nachteilig bei diesen Bindemitteln ist die Formaldehyd-Freisetzung durch hydrolytische Spaltung der N-Methylol-Funktion.

Um den Gehalt an freiem Formaldehyd zu verringern, werden in der Literatur verschiedene Strategien vorgeschlagen.
Man verwendet dazu alternative, formaldehydfreie Startersysteme, wie beispielsweise Ascorbinsäure. Solche Systeme sind in der Lage, den Formaldehyd-Gehalt um bis zu 80 % abzusenken, haben jedoch den Nachteil, dass sie sehr teuer sind. Die so produzierten Dispersionen können jedoch mit konventionellen Rezepturen und Anlagen produziert und verarbeitet werden.

EP-0778290 (US-A 5,744,418) beschreibt ein Verfahren, bei dem formaldehydhaltige Startersysteme durch Hydrogensulfit maskierte Aldehyde ersetzt werden. Verzichtet man dabei auf HCHO-haltige Monomere führt dies zu fast HCHO-freien Dispersionen (< 3ppm HCHO).

Aus US-A 5,585,438, DE-A 3328456 (AU 8431608), US-A 5,071,902, EP-A 0488605 (US-A 5,143,954) und US-A 5,326,814 ist die Verwendung von N-Methyolacrylamid als Vernetzer mit herkömmlichen Startersystemen möglich, jedoch mit weiterem Zusatz niedermolekularer Komponenten zum Abbau des freien Formaldehyds als Formaldehyd-Fänger bzw. Formaldehyd-Akzeptoren. Dabei werden Verbindungen gewählt, welche mit Formaldehyd schnell und möglichst quantitativ zu ungefährlichen Folgeprodukten reagieren. Verwendung hierbei haben insbesondere Harnstoff-Verbindungen, Acetoacetate, Dicyandiamid oder auch Imidazole gefunden. Jedoch zeichnen sich diese FormaldehydFänger dadurch aus, dass sie nur in einem eingeschränkten pH-Bereich funktionieren, keine Lagerstabilität aufweisen oder aber in großen Mengen zugesetzt werden müssen. Hier können Reduzierungen des Formaldehyds von über 90 % erreicht werden. Die so produzierten Dispersionen können ebenfalls mit konventionellen Rezepturen und Anlagen produziert und verarbeitet werden. Hierbei können sich jedoch Einflüsse des Scavengers negativ bemerkbar machen wie z.B. Verfärbung beim anschließenden Vernetzen oder aber eine erhöhte Toxizität der zugefügten Verbindungen.

Es bestand daher die Aufgabe, ein Verfahren zur Verringerung von freien Aldehyden bereitzustellen, ohne negative Begleiterscheinungen wie z.B. unangenehme Gerüche, erhöhte Toxizität oder Verfärbungen zu verursachen.

Es wurde überraschend gefunden, dass die oben angeführten Nachteile durch Zugabe von Thioaminverbindungen vermieden werden können.

Gegenstand der Erfindung ist ein Verfahren zur Verringerung von freien Aldehyden in Dispersionen, Suspensionen, Emulsionen oder Lösungen gemäß Anspruch 1.

Besonders bevorzugt sind dabei Verbindungen der Formel III oder IV bzw. deren Salze oder Ester mit R₁ gleich Wasserstoff oder Acetyl, mit R₂ -COOH, mit R₃ gleich Wasserstoff, mit R₄ gleich Wasserstoff oder Methyl und mit R₅ gleich -COOH oder -COOR oder -CH₂-COOR oder -CH₂-CN oder Aromat oder substituierter Aromat und n = 0 oder 1 ist.

Diese Verbindungen sind beispielsweise L-Cystein, D-Cystein, D,L-Cystein, N-Acetylcystein, Cysteamin, Homocystein oder deren Salze, Ester oder Amide, sowie deren Additionsprodukte (Aminothioacetale oder Aminothioketale) aus der Gruppe umfassend Glyoxylsäure und Brenztraubensäure und deren Ester und Amide, Benzaldehyd, Salicyladehyd, Vanillin, Anisaldehyd, Piperonal, Acetophenon, , Zimtaldehyd, Citral, Glucose, Fructose, Acetessigester und Acetylaceton.

Diese sind als in der Natur vorkommende Aminosäure-Derivate toxikologisch besonders unbedenklich.

Eine dauerhafte Verringerung von freiem Aldehyd, z.B. in Polymerdispersionen, kann durch Verwendung von Verbindungen wie beispielsweise Cystein, alleine also nicht immer erreicht werden. Verwendet man jedoch Verbindungen der allgemeinen Formel IV alleine oder in Gemischen mit Verbindungen der allgemeinen Formel III, so kann eine dauerhafte Verringerung von freien Aldehyden erreicht werden. Dies beruht auf der Tatsache, dass Verbindungen der allgemeinen Formel IV als stabile Lagerform von Verbindungen der Formel III nicht oxidiert werden können und mit dem freien Aldehyd gemäß der allgemeinen Gleichung (2) reagieren können.

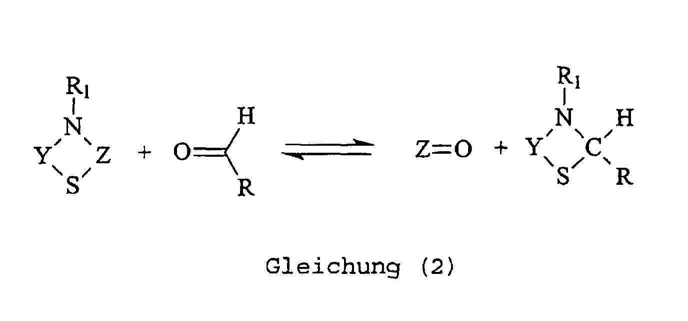

Dabei entsteht neben dem gebundenen Aldehyd eine Verbindung aus der Gruppe der Aldehyde oder Ketone. Diese können so gewählt werden, dass sie beispielsweise keinen unangebrachten Eigengeruch aufweisen oder nicht toxisch sind. Als Beispiele seien hier exemplarisch die Brenztraubensäure und Acetessigester aufgeführt, wobei letztere Verbindung vorteilhafterweise selbst wiederum als zusätzlicher Aldehydfänger wirken kann.

Das erfindungsgemässe Verfahren kann allgemein zur Verringerung von Aldehyden der Formel R-CHO verwendet werden, wobei R für einen organischen Alkyl- oder Arylrest mit 1-20 Kohlenstoffatomen oder Wasserstoff stehen kann. Besonders bevorzugt handelt es sich dabei um die Verringerung von Butyraldehyd, Acetaldehyd, Chloral und Formaldehyd und ganz besonders bevorzugt um die Verringerung von Formaldehyd.

Das erfindungsgemässe Verfahren wird allgemein zur Verringerung von Aldehyden in Dispersionen, Suspensionen, Emulsionen und Lösungen verwendet, wobei es sich bevorzugt um Dispersionen und Suspensionen, besonders bevorzugt um Polymerdispersionen und -suspensionen und ganz besonders bevorzugt um Polymerdispersionen handelt.

Die erfindungsgemäße Verringerung von freiem Aldehyd kann durch Einsatz von Verbindungen der allgemeinen Formel IV oder deren Salze, Amide oder Ester bevorzugt in einer Menge zwischen 0.002 Gew.-% und 20 Gew.-% oder deren Mischungen, jeweils bezogen auf die aldehydhaltigen Dispersionen, Suspensionen, Emulsionen oder Lösungen erreicht werden.

In einer bevorzugten Ausführungsform werden Polymerdispersionen mit den erfindungsgemässen Thioaminverbindungen gemischt. Die so erhaltenen Dispersionen sind stabil und weisen auch über einen längeren Zeitraum nur sehr geringe Gehalte an freien Aldehyden, beispielsweise Formaldehyd, auf (Lagerstabilität). Die so ausgerüsteten Dispersionen zeigen weder Verlust im Vernetzungsverhalten, noch sind die Verbindungen nach dem Vernetzen gefärbt. Vorteilhaft ist die einfache Anwendung des erfindungsgemässen Verfahrens, indem die erfindungsgemässen Thioaminverbindungen z.B. als wässrige Lösung der fertigen Polymerdispersion zugegeben werden können.

Die Kombination von Aminosäuren mit Vinylester-Dispersionen ist in JP-A 1192612 bereits erwähnt. Im Gegensatz zu dem vorliegenden erfindungsgemäßen Verfahren dient der Zusatz dort einer Stabilisierung der erhaltenen Dispersion um eine Sedimentation zu vermeiden. Dieser Effekt wird ausschließlich nur in Verbindung mit Acetoacetat-funktionalisierten Polyvinylalkohol als speziellem Schutzkolloid erreicht. Die im vorliegenden erfindungsgemäßen Verfahren verwendeten Dispersionen sind im Unterschied dazu auch ohne Zusatz von beispielsweise Cystein oder Acetoacetat-funktionalisierten Polyvinylalkoholen ausreichend stabil. Eine Verbesserung der Sedimentationsstabilität konnte bei Verwendung von Cystein nicht beobachtet werden. Die Verwendung von Cystein hatte jedoch auch keine nachteiligen Auswirkungen auf die Sedimentationsstabilität der verwendeten Dispersionen. Eine Verringerung des Formaldehydgehaltes in der Dispersion wurde jedoch in JP-A 1192612 nicht beschrieben. Dabei ist jedoch die Verwendung von Acetoacetaten als HCHO-Fänger in der Literatur allgemein bekannt. In der vorliegenden Erfindung ist eine Verringerung von Formaldehyd auch ohne die Verwendung acetoacetat-funktionalisierter Polyvinylalkohole durch alleinige Verwendung von Cystein als HCHO-Fänger erreicht worden.

Besonders geeignet ist das erfindungsgemäße Verfahren zur Verwendung in Polymerdispersionen oder Polymersuspensionen, die eine oder mehrere Monomereinheiten aus der Gruppe der Vinylester von unverzweigten oder verzweigten Carbonsäuren mit 1 bis 12 C-Atomen, der Ester ethylenisch ungesättigter Carbonsäuren, wie z.B.Acrylsäure, Methacrylsäure, Maleinsäure oder Fumarsäure, mit unverzweigten oder verzweigten Alkoholen mit 1 bis 12 C-Atomen, ethylenisch ungesättigte Carbonsäuren, ethylenisch ungesättigte Carbonsäureamide, ethylenisch ungesättigte Sulfonsäureamide, Vinylaromaten, Vinylhalogenide, alpha-Olefine oder mehrfach ethylenisch ungesättigte Verbindungen enthalten.

Die Herstellung der Vinylester-Copolymerisate bzw. der (Meth-)acrylsäureester-Copolymerisate erfolgt vorzugsweise nach dem Emulsionspolymerisationsverfahren und nach den bekannten technischen Verfahren.
Als Dispergiermittel können alle üblicherweise bei der Emulsionspolymerisation verwendeten Emulgatoren und Schutzkolloide eingesetzt werden.
Der für die Polymerisation gewünschte pH-Bereich, der im allgemeinen zwischen 3 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler zugesetzt werden.

Aus Dispersionen, welche zur Verringerung des Gehaltes an freiem Formaldeyhd nach dem erfindungsgemäßen Verfahren mit Thioalkylaminen versetzt wurden, können ebenfalls Dispersionspulver hergestellt werden. Zur Herstellung der Dispersionspulver wird die Dispersion getrocknet, vorzugsweise sprühgetrocknet oder gefriergetrocknet, besonders bevorzugt sprühgetrocknet. Hierbei kann auf die bekannten Vorrichtungen, wie zum Beispiel Versprühen durch Mehrstoffdüsen oder mit der Scheibe, in einem gegebenenfalls erhitzten Trockengasstrom, zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niederer Glasübergangstemperatur (Tg) ein Verbacken und Verblocken zu verhindern, wird bei der Trocknung gegebenenfalls Antiblockmittel, beispielsweise Aluminiumsilikate, Kieselgur, Calciumcarbonat, zugegeben. Des weiteren können gegebenenfalls noch Entschäumer, beispielsweise auf Silikon- oder Kohlenwasserstoffbasis, oder Verdüsungshilfen, beispielsweise Polyvinylalkohole, der Dispersion zugegeben werden.

In einer bevorzugten Ausführungsform enthalten die Dispersionspulver noch 0 bis 30 Gew.-%, besonders bevorzugt 1 bis 15 Gew.-%, bezogen auf das Basispolymerisat, Polyvinylalkohol mit einem Hydrolysegrad von 85 bis 94 Mol.-%, und/oder 0 bis 10 Gew.-% Vinylalkoholcopolymerisate mit 5 bis 35 Gew.-% 1-Methylvinylalkoholeinheiten, und/oder 0 bis 30 Gew.-%, besonders bevorzugt 4 bis 20 Gew.-%, bezogen auf das Gesamtgewicht polymerer Bestandteile, Antiblockmittel und gegebenenfalls bis zu 2 Gew.-%, bezogen auf das Basispolymerisat, Entschäumer.

Die hergestellten Polymerdispersionen bzw. deren Pulver können mit den erfindungsgemässen Thioalkylaminen ausgerüstet sein und als Mittel zur Beschichtung von Aldehyd-emittierenden Substraten wie z.B. Spanplatten oder daraus hergestellten Werkstoffen verwendet werden. Dabei kann die Beschichtung direkt oder indirekt erfolgen, indem z.B. die Dispersion auf ein zweites Substrat aufgetragen wird und vor oder nach dem Verfilmen auf das Formaldehyd abgebende Substrat aufgetragen oder damit verbunden wird.

Wässrige Lösungen, z.B. Waschlösungen, können ebenso mit den erfindungsgemässen Thioalkylaminen ausgerüstet sein, um im Sinne der Erfindung Aldehyde, beispielsweise Formaldehyd, durch Waschen von Textilien in diesen Lösungen zu verringern, oder aber um aldehydhaltige Gase oder Gasgemische, beispielsweise Abgase, mit diesen Lösungen auszuwaschen.

In einer weiteren Ausführungsform werden Emulsionen, wie sie für vielfältige Anwendungen z.B. in der Kosmetik-, der Pharmaoder der Textilindustrie eingesetzt werden mit den erfindungsgemässen Thioalkylaminen ausgerüstet, um den Gehalt an unerwünschten Aldehyden in diesen Emulsionen zu verringern.

Die nachfolgenden Beispiele dienen zur weiteren Erläuterung der Erfindung:

### Beispiel 1: (Vergleichbeispiel)

In eine Basis-Dispersion basierend auf Vinylacetat, Ethylen, NMAA und Butylacrylat (Typ: EN 428; Hersteller: Air Products Polymers) wurden jeweils 33 mmol verschiedener Verbindungen pro Liter Dispersion zugegeben und nach einer Verweilzeit von 2 Stunden der Gehalt an freiem Formaldehyd in der Dispersion gemessen. Die Ergebnisse sind in Tabelle 1 zusammengestellt.

**Tabelle 1:**

| HCHO-Fänger | Menge in mmol | Freies HCHO in [ppm] nach 2h |
|---|---|---|
| - | - | 210 |
| Ethanolamin | 33 | 151 |
| Glukose | 33 | 207 |
| Saccharose | 33 | 210 |
| Harnstoff | 33 | 173 |
| Ethandiol-bis-acetoacetat | 33 | 119 |
| Cystein | 33 | 2 |

### Beispiel 2:

In eine (low-formaldehyde) Basis-Dispersion basierend auf Vinylacetat, Ethylen, NMAA und Butylacrylat (Typ: LL 1020; Hersteller: Air Products Polymers) wurden jeweils 5 Mol-Äquivalente an Thioalkylaminen oder deren Derivaten zugegeben und nach einer Verweilzeit von 0, 24 Stunden und 48 Stunden der Gehalt an freiem Formaldehyd in der Dispersion gemessen. Die Ergebnisse sind in Tabelle 2 zusammengestellt.

**Tabelle 2:**

| Derivat (5 mol Äquivalente) | HCHO-Gehalt nach 0 h [ppm] | HCHO-Gehalt nach 24 h [ppm] | HCHO-Gehalt nach 48 h [ppm] |
|---|---|---|---|
| Cystein (Vergleichbeispiel) | 75 | 50 | 35 |
| 2-Methyl-2,5-Thiazolidindicarbon säure | 75 | 47 | 28 |
| 2-Methyl-2,5-Thiazolidindicarbon säure-Mg-Salz | 75 | 25 | 20 |

### Beispiel 3:

In eine Basis-Dispersion (analog Beispiel 2) basierend auf Vinylacetat, Ethylen, NMAA und Butylacrylat (Typ: LL 1020; Hersteller: Air Products Polymers) wurden verschiedene Mengen (1 bis 5 Mol-Äquivalente) an Methylthiazolidindicarbonsäure zugegeben und nach einer Verweilzeit von 0, 24, 48 und 168 Stunden der Gehalt an freiem Formaldehyd in der Dispersion gemessen. Die Ergebnisse sind in Tabelle 3 zusammengestellt.

**Tabelle 3:**

| Mol-Äquivalente HCHO-Fänger | HCHO-Gehalt nach 0 h [ppm] | HCHO-Gehalt nach 24 h [ppm] | HCHO-Gehalt nach 48 h [ppm] | HCHO-Gehalt nach 168 h [ppm] |
|---|---|---|---|---|
| 1 | 75 | 69 | 67 | 63 |
| 2 | 75 | 65 | 60 | 48 |
| 3 | 75 | 59 | 51 | 25 |
| 5 | 75 | 50 | 35 | 3 |

### Beispiel 4:

In eine Basis-Dispersion (analog Beispiel 2) basierend auf Vinylacetat, Ethylen, NMAA und Butylacrylat (Typ: LL 1020; Hersteller: Air Products Polymers) wurden 12.5 mmol (entspricht 5 mol-Äquivalenten) an Methylthiazolidindicarbonsäure (CP), dessen Na-Salz (CP-Na) und Thiazolidindicarbonsäure (CG) und dessen Na-Salz (CG-Na) zugegeben und nach einer Verweilzeit von 0, 1, 3, 7 und 20 Tagen der Gehalt an freiem Formaldehyd in der Dispersion gemessen. Die Ergebnisse sind in Tabelle 4 zusammengestellt.

**Tabelle 4:**

| HCHO-Fänger | HCHO-Gehalt nach 0 Tagen [ppm] | HCHO-Gehalt nach 1 Tag [ppm] | HCHO-Gehalt nach 3 Tagen [ppm] | HCHO-Gehalt nach 7 Tagen [ppm] | HCHO-Gehalt nach 20 Tagen [ppm] |
|---|---|---|---|---|---|
| CP | 75 | 48 | 15 | 2 | 3 |
| CP-Na | 75 | 29 | 15 | 2 | 3 |
| CG | 75 | 52 | 20 | 3 | 4 |
| CG-Na | 75 | 37 | 20 | 3 | 4 |

### Beispiel 5:

In eine Basis-Dispersion (analog Beispiel 2) basierend auf Vinylacetat, Ethylen, NMAA und Butylacrylat (Typ: LL 1020; Hersteller: Air Products Polymers) wurden 12.5 mmol (entspricht 5 mol-Äquivalenten) von Mischungen aus Methylthiazolidindicarbonsäure (CP) und Thiazolidindicarbonsäure (CG) sowie Cystein (C) zugegeben. Die Zahlen vor den Abkürzungen der Formaldehyd-Fänger in der ersten Spalte bezeichnen die eingesetzten Mol-Äquivalente bezüglich freiem Formaldehyd. Nach einer Verweilzeit von 0, 0.5, 2, 8 und 22 Tagen wurde der Gehalt an freiem Formaldehyd in der Dispersion gemessen. Die Ergebnisse sind in Tabelle 5 zusammengestellt.

**Tabelle 5:**

| HCHO-Fänger | HCHO-Gehalt nach 0 Tagen [ppm] | HCHO-Gehalt nach 0,5 Tagen [ppm] | HCHO-Gehalt nach 2 Tagen [ppm] | HCHO-Gehalt nach 8 Tagen [ppm] | HCHO-Gehalt nach 22 Tagen [ppm] |
|---|---|---|---|---|---|
| 4C+1CP | 75 | 17 | 5 | 1 | 6 |
| 3C+1CP | 75 | 30 | 4 | 4 | 11 |
| 5C+1CG | 75 | 9 | 2 | 2 | 8 |
| 4C+1CG | 75 | 16 | 4 | 6 | 19 |
| 4C+2CP | 75 | 16 | 1 | 1 | 3 |

### Beispiel 6: (Vergleichbeispiel)

In eine Basis-Dispersion (analog Beispiel 2) basierend auf Vinylacetat, Ethylen, NMAA und Butylacrylat (Typ: LL 1020; Hersteller: Air Products Polymers) wurden 12.5 mmol (entspricht 5 mol-Äquivalenten) von Cysteamin-Hydrochlorid (CA) und Homocystein-Hydrochlorid (HC) sowie N-Acetyl-Cystein (NAC) zugegeben. Nach einer Verweilzeit von 0, 1, 2 und 5 Tagen wurde der Gehalt an freiem Formaldehyd in der Dispersion gemessen.
Die Ergebnisse sind in Tabelle 6 zusammengestellt.

**Tabelle 6:**

| HCHO-Fänger | HCHO-Gehalt nach 0 Tagen [ppm] | HCHO-Gehalt nach 1 Tag [ppm] | HCHO-Gehalt nach 2 Tagen [ppm] | HCHO-Gehalt nach 5 Tagen [ppm] |
|---|---|---|---|---|
| CA | 75 | 15 | 9 | 4 |
| NAC | 75 | 34 | 34 | 36 |
| HC | 75 | 15 | 8 | 2 |

### Beispiel 7:

In eine Basis-Dispersion (analog Beispiel 2) basierend auf Vinylacetat, Ethylen, NMAA und Butylacrylat (Typ: LL 1020; Hersteller: Air Products Polymers) wurden 5 Mol-Äquvivalente bezogen auf freies Formaldehyd, von Thiazolidin-carbonsäuren, dargestellt durch Reaktion von Cystein und substituierten Aldehyden/Ketonen zugegeben. Nach einer Verweilzeit von 0, 2, 5 und 12 Tagen wurde der Gehalt an freiem Formaldehyd in der Dispersion gemessen. Die Ergebnisse sind in Tabelle 7 zusammengestellt.

**Tabelle 7:**

| Aldehyd/Keton | HCHO-Gehalt nach 0 Tagen [ppm] | HCHO-Gehalt nach 2 Tagen [ppm] | HCHO-Gehalt nach 5 Tagen [ppm] | HCHO-Gehalt nach 12 Tagen [ppm] |
|---|---|---|---|---|
| Benzaldehyd | 75 | 9 | 14 | 17 |
| Vanillin | 75 | 4 | 2 | 1 |
| Isobutyraldehyd | 75 | 19 | 15 | 11 |
| Salicylaldehyd | 75 | 4 | 4 | 2 |
| Pivaldehyd | 75 | 11 | 4 | n.b.*) |
| Trifluormethylbenz aldehyd | 75 | 2 | 1 | 0 |

| | | | | |
|---|---|---|---|---|
| *) nicht bestimmbar | | | | |

### Beispiel 8: (Vergleichbeispiel)

200 g Polyvinylbutyral (Typ: Pioloform BL 18, Hersteller: Wacker Polymer Systems) mit einem Butyraldehyd-Gehalt von 256 ppm wurden in 800 ml Wasser resuspendiert. Danach wurden 560 mg Cystein (5 mol-Äquivalente) zugegeben und 5 h bei 40 °C gerührt. Anschließend wurde das Polyvinylbutyral abfiltriert und der Butyraldehyd im Feststoff mit 62 ppm bestimmt. Im wässrigen Filtrat konnte ebenfalls kein Butyraldehyd nachgewiesen werden, sondern nur das entsprechende Thiazolidin und restl. Cystein.

### Beispiel 9: (Vergleichbeispiel)

500 ml einer wäßrigen Dispersion basierend auf Vinylacetat, Ethylen und Butylacrylat (Typ LL 489, Hersteller: Wacker Polymer Systems) wurden mit 100 mg Acetaldehyd versetzt (200 ppm). Anschließend wurden 5 Mol-Äquvivalente (bezogen auf Acetaldehyd), d.h. 1,78 g Cystein zugegeben. Nach einer Verweilzeit von 2 Tagen wurde der Gehalt an freiem Acetaldehyd in der Dispersion gemessen. Er betrug nur noch 18 ppm.

### Beispiel 10: (Vergleichbeispiel)

50 ml einer wässrigen (Wasch-)Lösung mit einem Gehalt von 500 ppm Butyraldehyd wurden mit 4 Mol-Äquivalenten, d.h. 268 mg Cystein versetzt. Nach einer Verweilzeit von einem Tag wurde der Gehalt an freiem Butyraldehyd in der Lösung gemessen. Er betrug nur noch 16 ppm.

### Beispiel 11: (Vergleichbeispiel)

50 ml einer wässrigen (Wasch-)Lösung mit einem Gehalt von 428 ppm Acetaldehyd wurden mit 4 Mol-Äquivalenten, d.h. 375 mg Cystein versetzt. Nach einer Verweilzeit von einem Tag wurde der Gehalt an freiem Acetaldehyd in der Lösung gemessen. Er betrug nur noch 33 ppm.

### Beispiel 12: (Vergleichbeispiel)

50 ml einer wässrigen (Wasch-)Lösung mit einem Gehalt von 210 ppm Formaldehyd wurden mit 5 Mol-Äquivalenten, d.h. 338 mg Cystein versetzt. Nach einer Verweilzeit von 1 Woche wurde der Gehalt an freiem Formaldehyd in der Lösung gemessen. Er betrug nur noch 1 ppm.

### Beispiel 13: (Vergleichbeispiel)

50 ml einer wässrigen (Wasch-)Lösung mit einem Gehalt von 428 ppm Acetaldehyd wurden mit einem Mol-Äquivalent, d.h. 94 mg Cystein versetzt. Nach einer Verweilzeit von einem Tag wurde der Gehalt an freiem Acetaldehyd in der Lösung gemessen. Er betrug nur noch 105 ppm. Nach einer Verweilzeit von einer Woche wurde der Gehalt an freiem Acetaldehyd in der Lösung mit 132 ppm bestimmt.

### Beispiel 14:

50 ml einer wässrigen (Wasch-)Lösung mit einem Gehalt von 428 ppm Acetaldehyd wurden mit einem Mol-Äquivalent Cystein und einem Mol-Äquivalent Methylthiazolidindicarbonsäure (CP) versetzt. Nach einer Verweilzeit von einem Tag wurde der Gehalt an freiem Acetaldehyd in der Lösung gemessen. Er betrug nur noch 88 ppm. Nach einer Verweilzeit von einer Woche wurde der Gehalt an freiem Acetaldehyd in der Lösung mit 87 ppm bestimmt.

### Beispiel 15: (Vergleichbeispiel)

50 ml einer O/W-Emulsion (3.5% Fett) mit einem Gehalt von 500 ppm Acetaldehyd wurden mit 4 Mol-Äquivalenten, d.h. 438 mg Cystein versetzt. Nach einer Verweilzeit von einem Tag wurde der Gehalt an freiem Acetaldehyd in der Emulsion gemessen. Er betrug nur noch 38 ppm.

### Beispiel 16:

50 ml einer O/W-Emulsion (10% Fett) mit einem Gehalt von 500 ppm Acetaldehyd wurden mit 4 Mol-Äquivalenten Cystein und einem Mol-Äquivalent Methylthiazolidindicarbonsäure (CP) versetzt. Nach einer Verweilzeit von einem Tag wurde der Gehalt an freiem Acetaldehyd in der Emulsion gemessen. Er betrug nur noch 36 ppm. Nach einer Verweilzeit von einer Woche wurde der Gehalt an freiem Acetaldehyd in der Emulsion mit 35 ppm bestimmt.

### Beispiel 17 :

50 ml einer O/W-Emulsion (10% Fett) mit einem Gehalt von 200 ppm Formaldehyd wurden mit 4 Mol-Äquivalenten Cystein und einem Mol-Äquivalent Methylthiazolidindicarbonsäure (CP) versetzt. Nach einer Verweilzeit von einer Woche wurde der Gehalt an freiem Formaldehyd in der Emulsion gemessen. Er betrug nur noch 1 ppm. Nach einer Verweilzeit von 4 Wochen wurde der Gehalt an freiem Formaldehyd in der Emulsion mit 1 ppm bestimmt.

## Patentansprüche

1. Verfahren zur Verringerung von freien Aldehyden in Dispersionen, Suspensionen, Emulsionen oder Lösungen **dadurch gekennzeichnet, dass** diesen Thioalkylamine der allgemeinen Formel IV 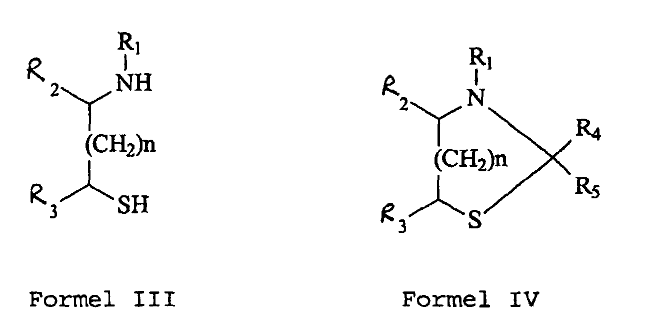 oder Mischungen von Thioalkylaminen der allgemeinen Formel III und IV zugegeben werden, wobei R₁ die Bedeutung organischer Alkyloder Arylrest mit bis zu 5 Kohlenstoffatomen, Wasserstoff oder Acetyl hat, R₂ für die Einheiten -(COO)ₐ-P oder -(CONH)ₐ-P steht, wobei a gleich 1 ist und P ein organischer Rest mit bis zu 10 Kohlenstoffatomen oder Wasserstoff ist, R₃ für einen einbindigen organischen Rest mit bis zu 10 Kohlenstoffatomen oder Wasserstoff steht, R₄ und R₅ für organische Reste mit bis zu 10 Kohlenstoffatomen oder Wasserstoff stehen, wobei R₄ und R₅ verbunden sein können und R₄ und R₅ zusammen mindestens ein C-Atom enthalten müssen, und n = 0 oder 1 ist.

2. Verfahren nach Anspruch 1 **dadurch gekennzeichnet, dass** die Salze oder Ester der Verbindungen der allgemeinen Formeln III oder IV verwendet werden.

3. Verfahren nach Anspruch 1 bis 2 **dadurch gekennzeichnet, dass** Verbindungen der Formel III oder IV bzw. deren Salze oder Ester mit R₁ gleich Wasserstoff oder Acetyl, mit R₂ -COOH, mit R₃ gleich Wasserstoff, mit R₄ gleich Wasserstoff oder Methyl und mit R₅ gleich -COOH, -COOR, -CH₂-COOR, -CH₂-CN, Aromat oder substituierter Aromat und n = 0 oder 1 verwendet werden.

4. Verfahren nach Anspruch 1 bis 3 **dadurch gekennzeichnet, dass** Verbindungen der Gruppe umfassend L-Cystein, D-Cystein, D,L-Cystein, N-Acetylcystein, Homocystein oder deren Salze, Ester oder Amide, oder deren Additionsprodukte (Aminothioacetale oder Aminothioketale) aus der Gruppe umfassend Glyoxylsäure oder Brenztraubensäure oder deren Ester oder Amide, Benzaldehyd, Salicyladehyd, Vanillin, Anisaldehyd, Piperonal, Acetophenon, Acetessigester, Acetylaceton, Zimtaldehyd, Citral, Glucose, Fructose verwendet werden.

5. Verfahren nach einem oder mehreren der Ansprüche 1-4, **dadurch gekennzeichnet, daß** Thioalkylamine, deren Salze, Amide oder Ester in einer Menge zwischen 0.002 Gew.-% und 20 Gew.-% bezogen auf die Dispersion, Suspension, Emulsion oder Lösung eingesetzt werden.

6. Verfahren nach Anspruch 1-5, **dadurch gekennzeichnet, dass** Aldehyde der Formel R-CHO, wobei R für einen organischen Alkyl- oder Arylrest mit 1-20 Kohlenstoffatomen oder Wasserstoff steht, entfernt werden.

7. Verfahren nach Anspruch 1-6, **dadurch gekennzeichnet, dass** Acetaldehyd, Butyraldehyd, Chloral oder Formaldehyd entfernt werden.

8. Verfahren nach Anspruch 1-7 **dadurch gekennzeichnet, dass** die Verringerung von freien Aldehyden in Dispersionen oder Suspensionen erfolgt.

9. Verfahren nach Anspruch 1-8 **dadurch gekennzeichnet, dass** die Verringerung von freien Aldehyden in Polymerdispersionen oder -suspensionen erfolgt.

10. Verfahren nach Anspruch 1-9, **dadurch gekennzeichnet, dass** die Verringerung von freien Aldehyden in Polymerdispersionen oder -suspensionen erfolgt, die eine oder mehrere Monomereinheiten aus der Gruppe der Vinylester von unverzweigten oder verzweigten Carbonsäuren mit 1 bis 12 C-Atomen, der Ester ethylenisch ungesättigter Carbonsäuren, mit unverzweigten oder verzweigten Alkoholen mit 1 bis 12 C-Atomen, ethylenisch ungesättigte Carbonsäuren, ethylenisch ungesättigte Carbonsäureamide, ethylenisch ungesättigte Sulfonsäureamide, Vinylaromaten, Vinylhalogenide, alpha-Olefine oder mehrfach ethylenisch ungesättigte Verbindungen enthalten.

11. Verfahren zur Verringerung von freien Aldehyden emittiert aus Substraten, **dadurch gekennzeichnet, dass** zur Beschichtung des Substrats eine Suspension, Dispersion, Emulsion, Lösung oder ein Pulver erhalten durch Trocknung einer Dispersionen enthaltend Thioalkylamine der allgemeinen Formel IV oder Mischungen von Thioalkylaminen der allgemeinen Formel III und IV verwendet wird, 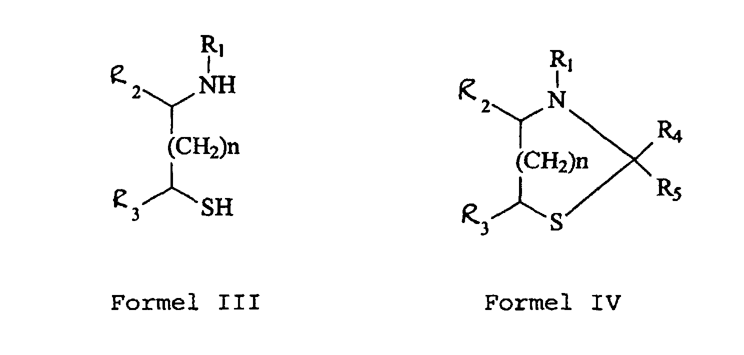 wobei R₁ die Bedeutung organischer Alkyl- oder Arylrest mit bis zu 5 Kohlenstoffatomen, Wasserstoff oder Acetyl hat, R₂ für die Einheiten -(COO)ₐ-P oder -(CONH)ₐ-P steht, wobei a gleich 1 ist und P ein organischer Rest mit bis zu 10 Kohlenstoffatomen oder Wasserstoff ist, R₃ für einen einbindigen organischen Rest mit bis zu 10 Kohlenstoffatomen oder Wasserstoff steht, R₄ und R₅ für organische Reste mit bis zu 10 Kohlenstoffatomen oder Wasserstoff stehen, wobei R₄ und R₅ verbunden sein können und R₄ und R₅ zusammen mindestens ein C-Atom enthalten müssen, und n = 0 oder 1 ist.

12. Verfahren nach Anspruch 11, **dadurch gekennzeichnet, dass** das Substrat durch direkte Auftragung, indirekte Auftragung oder durch Auftragung nach dem Verfilmen behandelt wird.

13. Verfahren nach Anspruch 11, **dadurch gekennzeichnet, daß** das Substrat eine Textile ist.

14. Verfahren nach einem oder mehreren der Ansprüche 11-13, **dadurch gekennzeichnet, daß** der Aldehyd Acetaldehyd, Butyraldehyd, Chloral oder Formaldehyd ist.

## Claims

1. Process for controlling free aldehydes in dispersions, suspensions, emulsions or solutions, **characterized in that** it comprises adding thereto thioalkylamines of the general formula IV 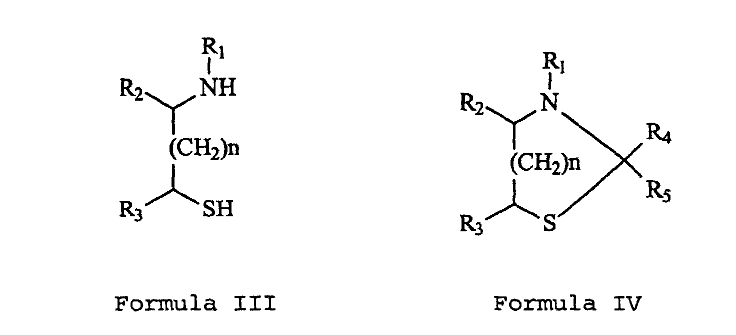 or mixtures of thioalkylamines of the general formula III and IV, where R₁ is an organic alkyl or aryl radical of up to 5 carbon atoms, hydrogen or acetyl, R₂ is -(COO)ₐ-P or -(CONH)ₐ-P, where a is 1 and P is an organic radical of up to 10 carbon atoms or hydrogen, R₃ is a monovalent organic radical of up to 10 carbon atoms or hydrogen, R₄ and R₅ represent organic radicals of up to 10 carbon atoms or hydrogen and may be bonded to each other, subject to the proviso that R₄ and R₅ together must contain at least one carbon atom, and n is 0 or 1.

2. Process according to Claim 1, **characterized in that** the salts or esters of the compounds of the general formulae III or IV are used.

3. Process according to either of Claims 1 and 2, **characterized in that** compounds of the formula III or IV or their salts or esters where R₁ is hydrogen or acetyl, R₂ is -COOH, R₃ is hydrogen or acetyl, R₄ is hydrogen or methyl, R₅ is -COOH, -COOR, -CH₂-COOR, -CH₂-CN, aromatic or substituted aromatic and n is 0 or 1 are used.

4. Process according to any of Claims 1 to 3, **characterized in that** compounds selected from the group consisting of L-cysteine, D-cysteine, D,L-cysteine, N-acetylcysteine, homocysteine or their salts, esters or amides, their addition products (aminothioacetals or aminothioketals) from the group consisting of glyoxylic acid or pyruvic acid or their esters or amides, benzaldehyde, salicylaldehyde, vanillin, anisaldehyde, piperonal, acetophenone, acetoacetate ester, acetylacetone, cinnamaldehyde, citral, glucose and fructose are used.

5. Process according to one or more of Claims 1-4, **characterized in that** thioalkylamines, their salts, amides or esters are used in an amount between 0.002% by weight and 20% by weight based on the dispersion, suspension, emulsion or solution.

6. Process according to any of Claims 1-5, **characterized in that** aldehydes of the formula R-CHO, where R is an organic alkyl or aryl radical of 1-20 carbon atoms or hydrogen are removed.

7. Process according to any of Claims 1-6, **characterized in that** acetaldehyde, butyraldehyde, chloral or formaldehyde are removed.

8. Process according to any of Claims 1-7, **characterized in that** free aldehydes are controlled in dispersions or suspensions.

9. Process according to any of Claims 1-8, **characterized in that** free aldehydes are controlled in polymer dispersions or suspensions.

10. Process according to any of Claims 1-9, **characterized in that** free aldehydes are controlled in polymer dispersions or suspensions containing one or more monomer units from the group of the vinyl esters of branched or unbranched carboxylic acids of 1 to 12 carbon atoms, the esters of ethylenically unsaturated carboxylic acids where the branched or unbranched alcohols of 1 to 12 carbon atoms, ethylenically unsaturated carboxylic acids, ethylenically unsaturated carboxamides, ethylenically unsaturated sulphonamides, styrenics, vinyl halides, alpha-olefins or multiply ethylenically unsaturated compounds.

11. Process for controlling free aldehydes emitted from substrates, **characterized in that** it comprises coating the substrate using a suspension, dispersion, emulsion, solution or powder obtained by drying a dispersion containing thioalkylamines of the general formula IV 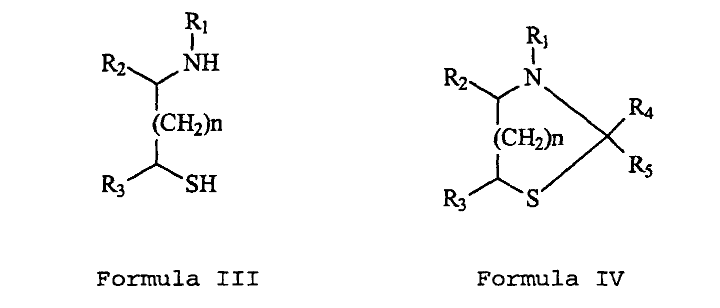 or mixtures of thioalkylamines of the general formula III and IV, where R₁ is an organic alkyl or aryl radical of up to 5 carbon atoms, hydrogen or acetyl, R₂ is -(COO)ₐ-P or -(CONH)ₐ-P, where a is 1 and P is an organic radical of up to 10 carbon atoms or hydrogen, R₃ is a monovalent organic radical of up to 10 carbon atoms or hydrogen, R₄ and R₅ represent organic radicals of up to 10 carbon atoms or hydrogen and may be bonded to each other, subject to the proviso that R₄ and R₅ together must contain at least one carbon atom, and n is 0 or 1.

12. Process according to Claim 11, **characterized in that** the substrate is treated by direct application, indirect application or by application after filming.

13. Process according to Claim 11, **characterized in that** the substrate is a textile.

14. Process according to one or more of Claims 11-13, **characterized in that** the aldehyde is acetaldehyde, butyraldehyde, chloral or formaldehyde.

## Revendications

1. Procédé de réduction du taux d'aldéhydes libres dans des dispersions, des suspensions, des émulsions ou des solutions, **caractérisé en ce que** celles-ci sont additionnées de thioalkylamines de formule générale IV 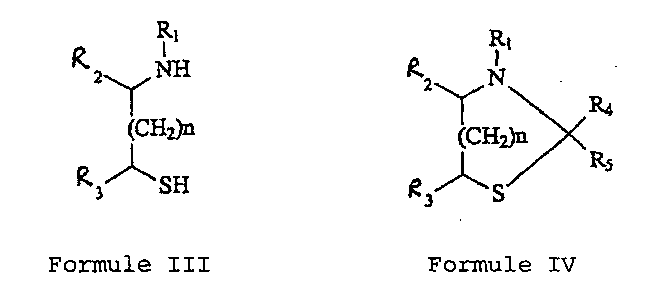 ou de mélanges de thioalkylamines de formules générales III et IV, dans lesquelles R₁ représente un radical organique alkyle ou aryle ayant jusqu'à 5 atomes de carbone, un hydrogène ou un acétyle, et R₂ représente les motifs -(COO)ₐ-P ou -(CONH)ₐ-P, dans lesquels a vaut 1 et P représente un radical organique ayant jusqu'à 10 atomes de carbone ou un hydrogène, R₃ représente un radical organique monovalent ayant jusqu'à 10 atomes de carbone ou un hydrogène, R₄ et R₅ représentent des radicaux organiques ayant jusqu'à 10 atomes de carbone ou un hydrogène, où R₄ et R₅ peuvent être liés et R₄ et R₅ doivent renfermer conjointement au moins un atome de carbone, et n vaut 0 ou 1.

2. Procédé selon la revendication 1, **caractérisé en ce que** l'on utilise les sels ou les esters des composés de formules générales III ou IV.

3. Procédé selon les revendications 1 et 2, **caractérisé en ce que** l'on utilise des composés de formules III ou IV ou leurs sels ou esters dans lesquelles R₁ représente un hydrogène ou un acétyle, R₂ représente -COOH, R₃ représente un hydrogène, R₄ représente un hydrogène ou un méthyle et R₅ représente -COOH, -COOR, -CH₂-COOR, -CH₂-CN, une structure aromatique ou une structure aromatique substituée et n vaut 0 ou 1.

4. Procédé selon les revendications 1 à 3, **caractérisé en ce que** l'on utilise des composés parmi le groupe constitué de la L-cystéine, de la D-cystéine, de la D,L-cystéine, de la N-acétylcystéine, de l'homocystéine ou de leurs sels, esters ou amides, ou leurs produits d'addition (aminothioacétals ou aminothiocétals) parmi le groupe constitué de l'acide glyoxylique ou de l'acide pyruvique ou de leurs esters ou amides, du benzaldéhyde, du salicylaldéhyde, de la vanilline, de l'anisaldéhyde, du pipéronal, de l'acétophénone, de l'acétoacétate d'éthyle, de l'acétylacétone, du cinnamaldéhyde, du citral, du glucose et du fructose.

5. Procédé selon l'une ou plusieurs des revendications 1 à 4, **caractérisé en ce que** l'on utilise des thioalkylamines, leurs sels, amides ou esters en une quantité comprise entre 0,002 % en poids et 20 % en poids, par rapport à la dispersion, la suspension, l'émulsion ou la solution.

6. Procédé selon les revendications 1 à 5, **caractérisé en ce que** les aldéhydes de formule R-CHO, dans laquelle R représente un radical organique alkyle ou aryle ayant de 1 à 20 atomes de carbone ou un hydrogène, sont éliminés.

7. Procédé selon les revendications 1 à 6, **caractérisé en ce que** l'acétaldéhyde, le butyraldéhyde, le chloral ou le formaldéhyde sont éliminés.

8. Procédé selon les revendications 1 à 7, **caractérisé en ce que** l'on procède à la réduction du taux d'aldéhydes libres dans des dispersions ou des suspensions.

9. Procédé selon les revendications 1 à 8, **caractérisé en ce que** l'on procède à la réduction du taux d'aldéhydes libres dans des dispersions ou des suspensions de polymères.

10. Procédé selon les revendications 1 à 9, **caractérisé en ce que** l'on procède à la réduction du taux d'aldéhydes libres dans des dispersions ou des suspensions de polymères, renfermant un ou plusieurs motifs monomères parmi le groupe des esters vinyliques d'acides carboxyliques non ramifiés ou ramifiés ayant de 1 à 12 atomes de carbone, des esters d'acides carboxyliques éthyléniquement insaturés avec des alcools non ramifiés ou ramifiés ayant de 1 à 12 atomes de carbone, d'acides carboxyliques éthyléniquement insaturés, de carboxamides éthyléniquement insaturés, de sulfonamides éthyléniquement insaturés, de composés vinyles aromatiques, d'halogénures de vinyle, d'alpha-oléfines ou de composés polyéthyléniquement insaturés.

11. Procédé de réduction du taux d'aldéhydes libres émis à partir de substrats, **caractérisé en ce que** pour le revêtement du substrat, on utilise une suspension, une dispersion, une émulsion, une solution ou une poudre obtenue par séchage d'une dispersion contenant des thioalkylamines de formule générale IV ou des mélanges de thioalkylamines de formules générales III et IV, 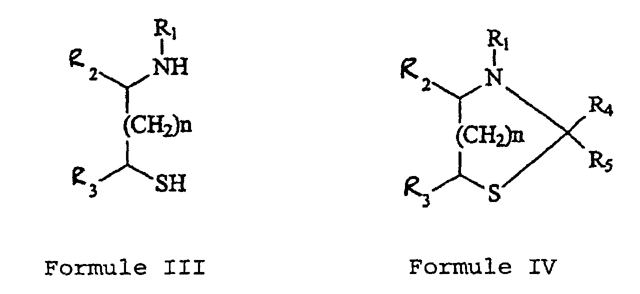 dans lesquelles R₁ représente un radical organique alkyle ou aryle ayant jusqu'à 5 atomes de carbone, un hydrogène ou un acétyle, R₂ représente les motifs -(COO)ₐ-P ou -(CONH)ₐ-P, dans lesquels a vaut 1 et P représente un radical organique ayant jusqu'à 10 atomes de carbone ou un hydrogène, R₃ représente un radical organique monovalent ayant jusqu'à 10 atomes de carbone ou un hydrogène, R₄ et R₅ représentent des radicaux organiques ayant jusqu'à 10 atomes de carbone ou un hydrogène, où R₄ et R₅ peuvent être liés et R₄ et R₅ doivent renfermer conjointement au moins un atome de carbone, et n vaut 0 ou 1.

12. Procédé selon la revendication 11, **caractérisé en ce que** le substrat est traité par application directe, par application indirecte ou par application après mise en film.

13. Procédé selon la revendication 11, **caractérisé en ce que** le substrat est un textile.

14. Procédé selon l'une ou plusieurs des revendications 11 à 13, **caractérisé en ce que** l'aldéhyde est l'acétaldéhyde, le butyraldéhyde, le chloral ou le formaldéhyde.
